# EUROPEAN PATENT SPECIFICATION

(11) **EP 3 480 874 B1**
(45) Date of publication and mention of the grant of the patent: **27.01.2021**
(21) Application number: 16907304.6
(22) Date of filing: 30.06.2016
(51) Int. Cl.: H01M 4/58, C01B 25/42

(54) **POSITIVE ELECTRODE MATERIAL FOR SECONDARY BATTERIES, METHOD FOR PRODUCING SAME, AND LITHIUM ION SECONDARY BATTERY**
POSITIVELEKTRODENMATERIAL FÜR SEKUNDÄRBATTERIEN, VERFAHREN ZUR HERSTELLUNG DAVON UND LITHIUM-IONEN-SEKUNDÄRBATTERIE
MATÉRIAU ACTIF D'ÉLECTRODE POSITIVE POUR BATTERIES SECONDAIRES, SON PROCÉDÉ DE FABRICATION ET BATTERIE SECONDAIRE AU LITHIUM-ION

(43) Date of publication of application: 08.05.2019
(73) Proprietor: Fujitsu Limited, Kawasaki-shi, Kanagawa 211-8588 (JP)
(72) Inventor: KURITA, Tomochika, Kawasaki-shi Kanagawa 211-8588 (JP); YAMAMOTO, Tamotsu, Kawasaki-shi Kanagawa 211-8588 (JP)
(74) Representative: Haseltine Lake Kempner LLP
(86) International application number: PCT/JP2016/069484
(87) International publication number: WO 2018/003071

(56) References cited:
- EP-A1- 2 508 476
- WO-A1-2013/035222
- JP-A- 2006 523 930
- US-A1- 2004 206 938
- DATABASE WPI Week 201323 Thomson Scientific, London, GB; AN 2013-D55440 XP002789815, -& WO 2013/035222 A1 (HITACHI LTD) 14 March 2013 (2013-03-14)
- ASARI Y ET AL: "Positive electrode material used for secondary battery, contains alkali metal-transition metal-halogen complex oxide as main component", WPI / 2017 CLARIVATE ANALYTICS,, vol. 2013, no. 23, 14 March 2013 (2013-03-14), XP002789815,

## Description

### FIELD

The embodiments discussed herein are related to a positive electrode material for secondary battery, a method for manufacturing a positive electrode material for secondary battery and a lithium ion secondary battery.

### BACKGROUND

To date, secondary batteries having a large energy density have been widely adopted as storage batteries used for cellular phones, mobile personal computers, sensing devices, electric cars, and the like. Examples of the secondary batteries include a lithium ion secondary battery.

The lithium ion secondary battery includes a positive electrode active material, which undergoes an oxidation-reduction reaction, in a positive electrode and a negative electrode active material, which undergoes an oxidation-reduction reaction, in a negative electrode. The positive electrode active material and the negative electrode active material release energy by undergoing a chemical reaction. The lithium ion secondary battery performs a function thereof by extracting the released energy as electrical energy.

The drivable output and the drive time of an apparatus, for example, a sensing device, is significantly influenced by the energy density of the positive electrode material for a battery.

Regarding the positive electrode material, Li₂MP₂O₇ (M represents a transition metal) having a pyrophosphate (P₂O₇) unit is expected to be a positive electrode material having a theoretical specific capacity of 220 mAh/g with respect to oxidation-reduction of M^{3+/2+} or M^{4+/3+}. Regarding the positive electrode material having a composition denoted by Li₂MP₂O₇, the potential of the material is different in accordance with the type of M. Synthesis and electrochemical evaluation have been performed with respect to Fe, Mn, and Co that are transition metals M (Fe: 3.5 V, Mn: 4.4 V, and Co: 4.9 V).

In order to further improve the drivable output and the drive time of an apparatus, an increase in capacity, size reduction, an increase in output, and the like of a battery have been desired. For the purpose of addressing such demands, a positive electrode material having a higher energy density have been desired.

The followings are a reference documents.
[Document 1] Shin-ichi Nishimura et al., "New Lithium Ion Pyrophosphate as 3.5 V Class Cathode Material for Lithium Ion Battery", Journal of the American Chemical Society, Vol. 132, 13596-13597, 2010,
[Document 2] Mao Tamaru et al., "Observation of the highest Mn3+/M2+ redox potential of 4.45 V in a Li2MnP2O7 pyrophosphate cathode", Journal of Materials Chemistry, Vol 22, 24526-24529, 2012, and
[Document 3] Hyungsub Kim et al., Neutron and X-ray diffraction Study of Pyrophosphate-Based Li2_xMP2O7 (M = Fe, Co) for Lithium Rechargeable Battery Electrodes", Chemistry of Materials, Vol. 23, 3930-3937, 2011.
[Document 4] US20040206938A1 discloses an electrochemical cell which includes a first electrode and a second electrode which is a counter electrode to said first electrode, and an electrolyte material interposed there between. The first electrode includes an active material having an alkali metal-containing oligo phosphate-based electrode active material.

### SUMMARY

The present invention is defined by the appended independent claims, to which reference should now be made. Specific embodiments are defined in the dependent claims. According to an aspect of the embodiments, a positive electrode material for secondary battery that is expressed in composition formula Li₂Co₁₋ₓNiₓP₂O₇ (0.00 < x ≤ 0.20).

### BRIEF DESCRIPTION OF DRAWINGS

FIG.1 is a schematic sectional view illustrating an example of a lithium ion secondary battery;
FIG. 2 depicts XRD profiles of products in examples and comparative examples;
FIG. 3 depicts discharge curves of half cells using positive electrode materials in the examples and comparative examples; and
FIG. 4 depicts dQ/dV curves of half cells using positive electrode materials in the examples and comparative examples.

### DESCRIPTION OF EMBODIMENTS

### Positive electrode material for lithium ion secondary battery

A positive electrode material for a secondary battery according to the present embodiment is denoted by a composition formula Li₂Co₁₋ₓNiₓP₂O₇ (0.00 < x ≤ 0.20).

The positive electrode material for the secondary battery Li₂MP₂O₇ (M represents a transition metal) having a pyrophosphate (P₂O₇) unit may reversibly occlude or release lithium through oxidation-reduction of M^{3+/2+} or M^{4+/3+}. A theoretical specific capacity refers to a specific capacity when all lithium in the positive electrode material for lithium ion battery is occluded or released. Li₂MP₂O₇ (M represents a transition metal) is expected to be a material having a theoretical specific capacity of 220 mAh/g.

The present inventors performed research on synthesis of Li₂MP₂O₇ having factors (high specific capacity and high potential) that increase the energy density in combination and realized the embodiments discussed herein.

The present inventors found that a material [Li₂Co₁₋ₓNiₓP₂O₇ (0.00 < x ≤ 0.20)] produced by substituting some of Co in Li₂MP₂O₇ with Ni had a high potential. In this regard, x satisfies preferably 0.05 ≤ x ≤ 0.20 and more preferably 0.10 ≤ x ≤ 0.20.

Preferably, the material is a single crystal phase (space group belongs to P2₁/c) having the same structure as Li₂MP₂O₇. It is preferable that the positive electrode material for lithium ion battery belong to, for example, the space group P2₁/c.

Substitution of some of Co with Ni has an effect of improving a potential, and an increase in the amount of substitution enhances the effect (about 0.15 V of improvement in potential by substitution of 20% with nickel is observed). However, if the amount of substitution is excessive, an effect of improving a potential is not observed.

### X-ray diffraction peak

Preferably, the secondary battery positive electrode material has diffraction peaks at 2θ = 14.3° ± 0.1°, 16.5° ± 0.1°, and 29.0° ± 0.1° based on X-ray diffraction using CuKα rays (2θ = 5° to 90°).

When the diffraction peak is measured, a silicon material (NIST 640d) is added and the measurement is performed. The offset of the 2θ value is adjusted such that a diffraction peak attributed to a crystal plane index (111) of Si appears at 2θ = 28.44°.

There is no particular limitation regarding the method for manufacturing a secondary battery positive electrode material according to the present embodiment, and the method may be appropriately selected. However, the following method for manufacturing a secondary battery positive electrode material is preferable.

### Method of manufacturing positive electrode material for secondary battery

The method of manufacturing a positive electrode material for a secondary battery according to the present embodiment includes a heat treatment operation and further includes other operations, for example, a mixing operation, as the situation demands.

### Mixing operation

There is no particular limitation regarding the mixing operation as long as a lithium salt, a cobalt salt, a nickel salt, and a phosphate are mixed so as to obtain a mixture thereof in the operation. The mixing operation may be appropriately selected in accordance with the purpose and may be performed by using, for example, a planetary ball mill.

There is no particular limitation regarding an anion constituting the lithium salt, and the anion may be appropriately selected in accordance with the purpose. Examples of the anion include a carbonate ion, an oxalate ion, an acetate ion, a nitrate anion, a sulfate anion, a phosphate ion, a fluorine ion, a chlorine ion, a bromine ion, and an iodine ion. These may be used alone, or at least two types may be used in combination.

There is no particular limitation regarding the lithium salt, and the lithium salt may be appropriately selected in accordance with the purpose. Examples of the lithium salt include lithium carbonate (Li₂CO₃), lithium nitrate (LiNO₃), lithium sulfate (Li₂SO₄), lithium perchlorate (LiClO₄), lithium hexafluorophosphate (LiPF₆), and lithium tetrafluoroborate (LiBF₄). These may be hydrates or anhydrites. For example, lithium carbonate and lithium sulfate are preferable because a side reaction hardly occurs.

There is no particular limitation regarding an anion constituting the cobalt salt, and the anion may be appropriately selected in accordance with the purpose. Examples of the anion include a carbonate ion, an oxalate ion, an acetate ion, a nitrate anion, a sulfate anion, a phosphate ion, a fluorine ion, a chlorine ion, a bromine ion, and an iodine ion. These may be used alone, or at least two types may be used in combination.

There is no particular limitation regarding the cobalt salt, and the cobalt salt may be appropriately selected in accordance with the purpose. Examples of the cobalt salt include cobalt oxalate, cobalt nitrate, cobalt sulfate, and cobalt chloride. These may be hydrates or anhydrites.

There is no particular limitation regarding an anion constituting the nickel salt, and the anion may be appropriately selected in accordance with the purpose. Examples of the anion include a carbonate ion, an oxalate ion, an acetate ion, a nitrate anion, a sulfate anion, a phosphate ion, a fluorine ion, a chlorine ion, a bromine ion, and an iodine ion. These may be used alone, or at least two types may be used in combination.

There is no particular limitation regarding the nickel salt, and the nickel salt may be appropriately selected in accordance with the purpose. Examples of the nickel salt include nickel oxalate, nickel acetate, nickel sulfate, nickel nitrate, and nickel chloride. These may be hydrates or anhydrites.

There is no particular limitation regarding a cation constituting the phosphate, and the cation may be appropriately selected in accordance with the purpose. The cation may be, for example, an ammonium ion.

Examples of the phosphate include diammonium hydrogenphosphate. There is no particular limitation regarding the ratio of the lithium salt, the cobalt salt, the nickel salt, and the phosphate when mixing is performed, and the ratio may be appropriately selected in accordance with the purpose.

### Heat treatment operation

There is no particular limitation regarding the heat treatment operation as long as the mixture is heat-treated, and the heat treatment operation may be appropriately selected in accordance with the purpose.

There is no particular limitation regarding the temperature of the heat treatment, and the temperature may be appropriately selected in accordance with the purpose. However, the temperature is preferably 500°C to 720°C and more preferably 620°C to 680°C.

There is no particular limitation regarding the time of the heat treatment, and the time may be appropriately selected in accordance with the purpose. However, the time is preferably 1 hour or more and 24 hours or less, more preferably 2 hours or more and 18 hours or less, and particularly preferably 3 hours or more and 15 hours or less.

Preferably, the heat treatment is performed in an inert atmosphere. Examples of the inert atmosphere include an argon atmosphere.

### Lithium ion secondary battery

A lithium ion secondary battery according to the present embodiment includes at least the secondary battery positive electrode material according to the present embodiment and other members, as the situation demands.

The lithium ion secondary battery includes at least, for example, a positive electrode and further includes other members, for example, a negative electrode, an electrolyte, a separator, a positive electrode case, and a negative electrode case, as the situation demands.

### Positive electrode

The positive electrode includes at least the secondary battery positive electrode material according to the present embodiment and further includes other portions, for example, a positive electrode collector, as the situation demands.

In the positive electrode, the secondary battery positive electrode material functions as a so-called positive electrode active material.

There is no particular limitation regarding the content of the secondary battery positive electrode material in the positive electrode, and the content may be appropriately selected in accordance with the purpose.

In the positive electrode, the secondary battery positive electrode material may be mixed with a conductive material and a binder so as to form a positive electrode layer.

There is no particular limitation regarding the conductive material, and the conductive material may be appropriately selected in accordance with the purpose. Examples of the conductive material include carbon-based conductive materials. Examples of the carbon-based conductive materials include acetylene black and carbon black.

There is no particular limitation regarding the binder, and the binder may be appropriately selected in accordance with the purpose. Examples of the binder include polytetrafluoroethylene (PTFE), polyvinylidene fluoride (PVDF), ethylene-propylene-butadiene rubber (EPBR), styrene-butadiene rubber (SBR), and carboxymethyl cellulose (CMC).

There is no particular limitation regarding the material, the size, and the structure of the positive electrode, and these may be appropriately selected in accordance with the purpose.

There is no particular limitation regarding the shape of the positive electrode, and the shape may be appropriately selected in accordance with the purpose. Examples of the shape include a rod-like shape and a disk-like shape.

### Positive electrode collector

There is no particular limitation regarding the shape, the size, and the structure of the positive electrode collector, and these may be appropriately selected in accordance with the purpose.

There is no particular limitation regarding the material for the positive electrode collector, and the material may be appropriately selected in accordance with the purpose. Examples of the material include stainless steel, aluminum, copper, and nickel.

The positive electrode collector functions to bring the positive electrode layer and the positive electrode case serving as a terminal into good conduction.

### Negative electrode

The negative electrode includes at least a negative electrode active material and further includes other portions, for example, a negative electrode collector, as the situation demands.

There is no particular limitation regarding the size and the structure of the negative electrode, and these may be appropriately selected in accordance with the purpose.

There is no particular limitation regarding the shape of the negative electrode, and the shape may be appropriately selected in accordance with the purpose. Examples of the shape include a rod-like shape and a disk-like shape.

### Negative electrode active material

There is no particular limitation regarding the negative electrode active material, and the negative electrode active material may be appropriately selected in accordance with the purpose. Examples of the negative electrode active material include compounds containing an alkali metal element.

Examples of the compounds containing an alkali metal element include a metal simple substance, an alloy, a metal oxide, and a metal nitride.

Examples of the alkali metal element include lithium.

Examples of the metal simple substance include lithium.

Examples of the alloy include an alloy containing lithium. Examples of the alloy containing lithium include a lithium aluminum alloy, a lithium tin alloy, a lithium lead alloy, and a lithium silicon alloy.

Examples of the metal oxide include a metal oxide containing lithium. Examples of the metal oxide containing lithium include a lithium titanium oxide.

Examples of the metal nitride include a metal nitride containing lithium. Examples of the metal nitride containing lithium include a lithium cobalt nitride, a lithium iron nitride, and a lithium manganese nitride.

There is no particular limitation regarding the content of the negative electrode active material, and the content may be appropriately selected in accordance with the purpose.

In the negative electrode, the negative electrode active material may be mixed with a conductive material and a binder so as to form a negative electrode layer.

There is no particular limitation regarding the conductive material, and the conductive material may be appropriately selected in accordance with the purpose. Examples of the conductive material include carbon-based conductive materials. Examples of the carbon-based conductive materials include acetylene black and carbon black.

There is no particular limitation regarding the binder, and the binder may be appropriately selected in accordance with the purpose. Examples of the binder include polytetrafluoroethylene (PTFE), polyvinylidene fluoride (PVDF), ethylene-propylene-butadiene rubber (EPBR), styrene-butadiene rubber (SBR), and carboxymethyl cellulose (CMC).

### Negative electrode collector

There is no particular limitation regarding the shape, the size, and the structure of the negative electrode collector, and these may be appropriately selected in accordance with the purpose.

There is no particular limitation regarding the material for the negative electrode collector, and the material may be appropriately selected in accordance with the purpose. Examples of the material include stainless steel, aluminum, copper, and nickel.

The negative electrode collector functions to bring the negative electrode layer and the negative electrode case serving as a terminal into good conduction.

### Electrolyte

There is no particular limitation regarding the electrolyte, and the electrolyte may be appropriately selected in accordance with the purpose. Examples of the electrolyte include a nonaqueous electrolyte and a solid electrolyte.

### Nonaqueous electrolytic solution

Examples of the nonaqueous electrolytic solution include a nonaqueous electrolytic solution containing a lithium salt and an organic solvent.

### Lithium salt

There is no particular limitation regarding the lithium salt, and the lithium salt may be appropriately selected in accordance with the purpose. Examples of the lithium salt include lithium hexafluorophosphate, lithium tetrafluoroborate, lithium perchlorate, lithium bis(pentafluoroethanesulfone)imide, and lithium bis(trifluoromethanesulfone)imide. These may be used alone, or at least two types may be used in combination.

There is no particular limitation regarding the concentration of the lithium salt, and the concentration may be appropriately selected in accordance with the purpose. The concentration in the organic solvent is preferably 0.5 mol/L to 3 mol/L from the viewpoint of ionic conductivity.

### Organic solvent

There is no particular limitation regarding the organic solvent, and the organic solvent may be appropriately selected in accordance with the purpose. Examples of the organic solvent include ethylene carbonate, dimethyl carbonate, propylene carbonate, diethyl carbonate, and ethyl methyl carbonate. These may be used alone, or at least two types may be used in combination.

There is no particular limitation regarding the content of the organic solvent in the nonaqueous electrolytic solution, and the content may be appropriately selected in accordance with the purpose. The content is preferably 75% by mass to 95% by mass, and more preferably 80% by mass to 90% by mass.

If the content of the organic solvent is less than 75% by mass, the viscosity of the nonaqueous electrolytic solution increases, and the wettability with the electrode is reduced. As a result, the internal resistance of the battery may be increased. If the content is more than 95% by mass, the ionic conductivity is reduced, and a reduction in the output of the battery may be caused. On the other hand, when the content of the organic solvent is within the above-described more preferable range, there are advantaged in that high ionic conductivity may be maintained and the wettability with the electrode may be maintained because the viscosity of the nonaqueous electrolytic solution is reduced.

### Solid electrolyte

There is no particular limitation regarding the solid electrolyte, and the solid electrolyte may be appropriately selected in accordance with the purpose. Examples of the solid electrolyte include an inorganic solid electrolyte and an intrinsic polymer electrolyte.

Examples of the inorganic solid electrolyte include a LISICON material and a perovskite material.

Examples of the intrinsic polymer electrolyte include a polymer having an ethylene oxide bond.

There is no particular limitation regarding the content of the electrolyte in the lithium ion secondary battery, and the content may be appropriately selected in accordance with the purpose.

### Separator

There is no particular limitation regarding the material for the separator, and the material may be appropriately selected in accordance with the purpose. Examples of the material include paper, cellophane, a polyolefin nonwoven fabric, a polyamide nonwoven fabric, and a glass fiber nonwoven fabric. Examples of the paper include kraft paper, vinylon mixed paper, and synthetic pulp mixed paper.

There is no particular limitation regarding the shape of the separator, and the shape may be appropriately selected in accordance with the purpose. Examples of the shape include a sheet-like shape.

The structure of the separator may be a single layer structure or a multilayer structure.

There is no particular limitation regarding the size of the separator, and the size may be appropriately selected in accordance with the purpose.

### Positive electrode case

There is no particular limitation regarding the material for the positive electrode case, and the material may be appropriately selected in accordance with the purpose. Examples of the material include copper, stainless steel, and a metal that is stainless steel or iron plated with, for example, nickel.

There is no particular limitation regarding the shape of the positive electrode case, and the shape may be appropriately selected in accordance with the purpose. Examples of the shape include the shape of a shallow dish with a warped outer edge, the shape of a circular cylinder with a bottom, and the shape of a prism with a bottom.

The structure of the positive electrode case may be a single layer structure or a multilayer structure. Examples of the multilayer structure include a three-layer structure composed of, for example, nickel, stainless steel, and copper.

There is no particular limitation regarding the size of the positive electrode case, and the size may be appropriately selected in accordance with the purpose.

### Negative electrode case

There is no particular limitation regarding the material for the negative electrode case, and the material may be appropriately selected in accordance with the purpose. Examples of the material include copper, stainless steel, and a metal that is stainless steel or iron plated with, for example, nickel.

There is no particular limitation regarding the shape of the negative electrode case, and the shape may be appropriately selected in accordance with the purpose. Examples of the shape include the shape of a shallow dish with a warped outer edge, the shape of a circular cylinder with a bottom, and the shape of a prism with a bottom.

The structure of the negative electrode case may be a single layer structure or a multilayer structure. Examples of the multilayer structure include a three-layer structure composed of, for example, nickel, stainless steel, and copper.

There is no particular limitation regarding the size of the negative electrode case, and the size may be appropriately selected in accordance with the purpose.

There is no particular limitation regarding the shape of the lithium ion secondary battery, and the shape may be appropriately selected in accordance with the purpose. Examples of the shape include a coin-like shape, a circular cylindrical shape, a rectangular shape, and a sheet-like shape.

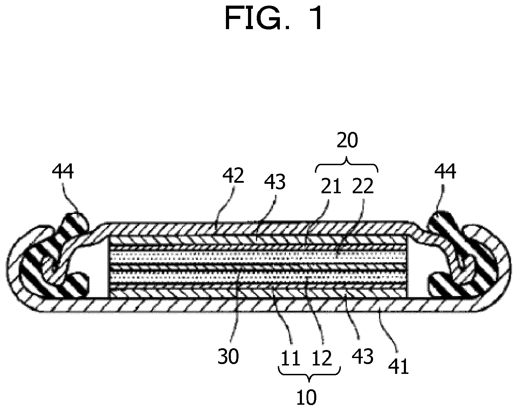

An example of the lithium ion secondary battery according to the present embodiment will be described with reference to the drawings. FIG. 1 is a schematic sectional view illustrating an example of the lithium ion secondary battery according to the present embodiment.

The lithium ion secondary battery depicted as FIG. 1 is a coin-type lithium ion secondary battery. The coin-type lithium ion secondary battery includes a positive electrode 10 composed of a positive electrode collector 11 and a positive electrode layer 12, a negative electrode 20 composed of a negative electrode collector 21 and a negative electrode layer 22, and an electrolyte layer 30 interposed between the positive electrode 10 and the negative electrode 20. In the lithium ion secondary battery depicted as FIG. 1, the positive electrode collector 11 and the negative electrode collector 21 are fixed to a positive electrode case 41 and a negative electrode case 42, respectively, with a collector 43 interposed therebetween. For example, a polypropylene packing material 44 seals between the positive electrode case 41 and the negative electrode case 42. Each of a gap between the positive electrode collector 11 and the positive electrode case 41 and a gap between the negative electrode collector 21 and the negative electrode case 42 is filled with the collector 43 such that electrical continuity is ensured.

The positive electrode layer 12 is produced by using the secondary battery positive electrode material according to the present embodiment.

### Embodiments

Hereinafter, embodiments of the technique disclosed in the present application will be described.

The following raw materials used in embodiments and comparative examples were available from the companies described below.
Li₂CO₃: Kojundo Chemical Laboratory Co., Ltd.
CoC₂O₄·2H₂O: JUNSEI CHEMICAL CO., LTD.
NiC₂O₄·2H₂O: Kojundo Chemical Laboratory Co., Ltd.
(NH₄)₂HPO₄: KANTO CHEMICAL CO., INC.

### Embodiments 1 and 2 and comparative examples 1 to 4 Production of H₂NiP₂O₇

Each of lithium carbonate (Li₂CO₃), cobalt oxalate dihydrate (CoC₂O₄·2H₂O), nickel oxalate dihydrate (NiC₂O₄·2H₂O), and diammonium hydrogenphosphate [(NH₄)₂HPO₄] was weighed as described in Table 1, and mixing was performed in a planetary ball mill. The resulting mixture was fired in an argon atmosphere at 650°C for 6 hours. The compositions of all the resulting products were denoted by Li₂Co₁₋ₓNiₓP₂O₇, and the values of x of the respective products were 0.00, 0.10, 0.20, 0.30, 0.50, and 1.00.

**Table 1**

| | Value of x | Li₂CO₃ | CoC₂O₄·2H₂O | NiC₂O₄·2H₂O | (NH₄)₂HPO₄ |
|---|---|---|---|---|---|
| Comparative example 1 | 0.00 | 1.499 g | 3.709 g | - | 5.352 g |
| Embodiment 1 | 0.10 | 1.529 g | 3.412 g | 0.378 g | 5.470 g |
| Embodiment 2 | 0.20 | 1.540 g | 3.040 g | 0.762 g | 5.489 g |
| Comparative example 2 | 0.30 | 1.697 g | 2.939 g | 1.257 g | 6.060 g |
| Comparative example 3 | 0.50 | 1.801 g | 2.230 g | 2.223 g | 6.445 g |
| Comparative example 4 | 1.00 | 1.509 g | - | 3.711 g | 5.257 g |

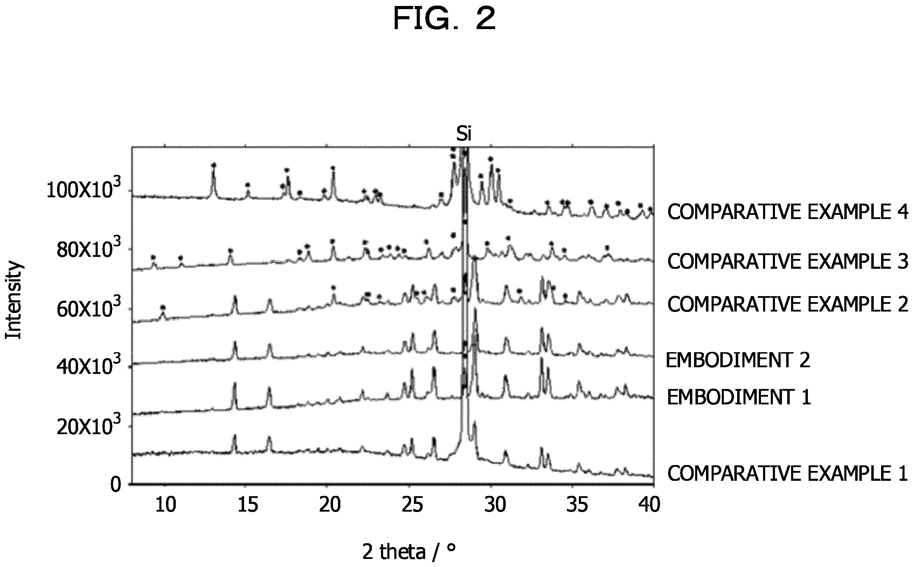

FIG. 2 depicts XRD profiles of the products. In order to adjust a diffraction peak position, a silicon material (NIST 640d) serving as a reference sample was added to each product and the measurement was performed. The offset of the 2θ value was adjusted such that a diffraction peak attributed to a crystal plane index (111) of Si appeared at 2θ = 28.44°. Regarding the diffraction peaks of the respective products, a mark ● was attached to diffraction peaks that was not attributed to a Li₂CoP₂O₇ phase.

Regarding embodiment 1 and embodiment 2, diffraction spectra that were attributed to a single Li₂CoP₂O₇ phase (JCPDS Card No. 01-080-7757) in the same manner as comparative example 1 were obtained.

On the other hand, regarding comparative example 2 to comparative example 4, diffraction peaks that were not attributed to the Li₂CoP₂O₇ phase were detected.

Regarding comparative example 2, the diffraction peaks of Li₂CoP₂O₇ were detected and, in addition, diffraction peaks that were attributed to impurity phases such as a LiCo₂P₃O₁₀ phase (JCPDS Card No. 01-087-1838) and a Li₄P₂O₇ phase (JCPDS Card No. 01-077-1415) were also detected.

Regarding comparative example 3 and comparative example 4, the diffraction peaks of the Li₂CoP₂O₇ phase were not detected, but diffraction peaks that were attributed to a Li_{5.88}Co_{5.06} (P₂O₇)₄ phase (JCPDS Card No. 01-070-3615), a Li₂Ni₃(P₂O₇)₂ phase (JCPDS Card No. 01-087-1918), or a Li₄P₂O₇ phase (JCPDS Card No. 01-077-1415) were mainly detected.

### Charge-discharge voltage evaluation

A half-cell was produced by using a positive electrode active material that was a product.

A positive electrode mix was set to contain the positive electrode active material, carbon black (ECP600JD, Lion Corporation), and polyvinylidene fluoride (KF#1300, KUREHA CORPORATION) at a mass ratio (positive electrode active material:carbon black:polyvinylidene fluoride) of 85:10:5.

Regarding an electrolytic solution used, 1 M of lithium bis(trifluoromethanesulfonyl)imide was dissolved into 1-methyl-1-propylpyrroridinium bis(trifluoromethanesulfonyl)imide.

Metal lithium was used as the negative electrode.

The condition for a constant current charge-discharge test was as described below.

Charging was stopped at 5.25 V, and discharging was stopped at 3.0 V. Suspension for 10 minutes in an open circuit state was set between charging and discharging.

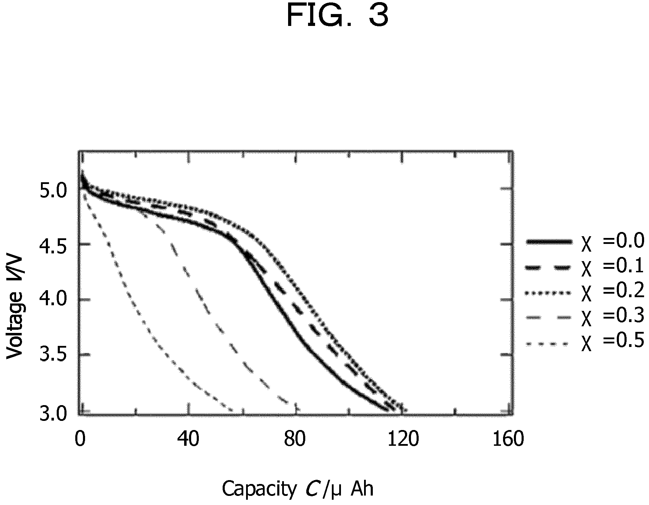

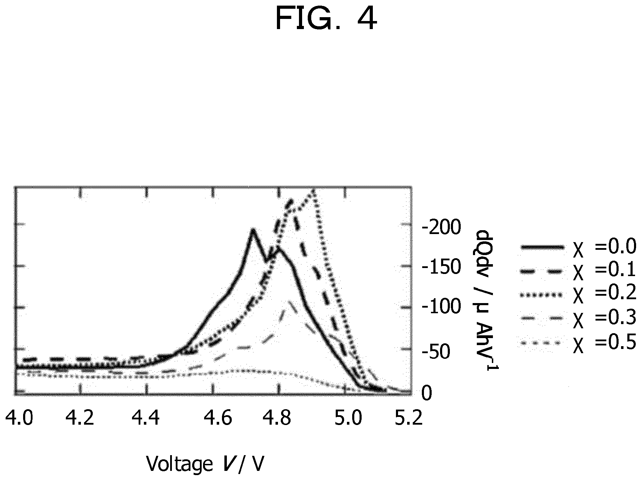

The results are described in Table 2, FIG. 3, and FIG. 4.

Table 2 describes numerical values of the charge potential and the discharge potential and the average potential (intermediate value of the charge potential and the discharge potential), FIG. 3 depicts discharge curves, and FIG. 4 depicts dQ/dV curves derived from the discharge curves.

As is clear from FIG. 3, the discharge potential increased as the amount of substitution with Ni increased. As is clear from the result, depicted as FIG. 4, of the numerical evaluation of the discharge potential, an increase in the potential when x = 0.20 compared with the potential when x = 0.00 was evaluated as about 0.2 V. Likewise, regarding the charge potential, a tendency of increase in potential was observed, and the average potential was 5.05 V when x = 0.20.

**Table 2**

| x | Charge potential [V] | Discharge potential [V] | Average potential [V] |
|---|---|---|---|
| 0.00 | 5.08 | 4.72 | 4.90 |
| 0.10 | 5.12 | 4.84 | 4.98 |
| 0.20 | 5.19 | 4.91 | 5.05 |
| 0.30 | 5.05 | 4.83 | 4.94 |
| 0.50 | 5.09 | 4.69 | 4.89 |
| 1.00 | (charge-discharge was not observed) | | |

### Reference Signs List

- 10: POSITIVE ELECTRODE
- 11: POSITIVE ELECTRODE COLLECTOR
- 12: POSITIVE ELECTRODE LAYER
- 20: NEGATIVE ELECTRODE
- 21: NEGATIVE ELECTRODE COLLECTOR
- 22: NEGATIVE ELECTRODE LAYER
- 30: ELECTROLYTE LAYER
- 41: POSITIVE ELECTRODE CASE

## Claims

1. A positive electrode material for secondary battery that is expressed in composition formula Li₂Co₁₋ₓNiₓP₂O₇ (0.00 < x ≤ 0.20).

2. The positive electrode material for secondary battery according to claim 1,
wherein a single crystal phase of the positive electrode material belonging to a space group P2₁/c.

3. The positive electrode material for secondary battery according to claim 1 or 2,
wherein the positive electrode material has diffraction peaks at 2θ = 14.3° ± 0.1°, 16.5° ± 0.1°, and 29.0° ± 0.1° based on X-ray diffraction using CuKα rays (2θ = 5° to 90°).

4. A method of manufacturing a positive electrode material for secondary battery that is expressed in composition formula Li₂Co₁₋ₓNiₓP₂O₇ (0.00 < x ≤ 0.20), the method comprising:
forming a mixture of a lithium salt, a cobalt salt, a nickel salt, and a phosphate; and
heat-treating the mixture; wherein
an anion constituting the lithium salt is at least one of a carbonate ion, an oxalate ion, an acetate ion, a nitrate anion, a sulfate anion, a phosphate ion, a fluorine ion, a chlorine ion, a bromine ion, and an iodine ion,
an anion constituting the cobalt salt is at least one of a carbonate ion, an oxalate ion, an acetate ion, a nitrate anion, a sulfate anion, a phosphate ion, a fluorine ion, a chlorine ion, a bromine ion, and an iodine ion, and
an anion constituting the nickel salt is at least one of a carbonate ion, an oxalate ion, an acetate ion, a nitrate anion, a sulfate anion, a phosphate ion, a fluorine ion, a chlorine ion, a bromine ion, and an iodine ion;
and wherein
a cation constituting the phosphate is an ammonium ion.

5. A lithium ion secondary battery comprising:
a positive electrode (10) containing the positive electrode material for secondary battery according to any one of claims 1 to 3,
a negative electrode (20); and
an electrolyte disposed between the positive electrode and the negative electrode (20).

## Patentansprüche

1. Positivelektrodenmaterial für eine Sekundärbatterie, ausgedrückt durch die Zusammensetzungsformel Li₂Co₁₋ₓNiₓP₂O₇ (0,00 < x ≤ 0,20).

2. Positivelektrodenmaterial für eine Sekundärbatterie nach Anspruch 1,
wobei eine einkristalline Phase des Positivelektrodenmaterials zu einer Raumgruppe P2_{1/C} gehört.

3. Positivelektrodenmaterial für eine Sekundärbatterie nach Anspruch 1 oder 2,
wobei das Positivelektrodenmaterial Beugungspeaks bei 2θ = 14,3° ± 0,1°, 16,5° ± 0,1°, und 29,0° ± 0,1° aufweist, basierend auf Röntgenbeugung unter Verwendung von CuKα-Strahlen (2θ = 5° bis 90°).

4. Verfahren zur Herstellung eines Positivelektrodenmaterial für eine Sekundärbatterie, ausgedrückt durch die Zusammensetzungsformel Li₂Co₁₋ₓNiₓP₂O₇ (0,00 < x ≤ 0,20), wobei das Verfahren umfasst:
Bilden einer Mischung aus einem Lithiumsalz, einem Kobaltsalz, einem Nickelsalz und einem Phosphat; und
Wärmebehandlung der Mischung; wobei
ein Anion, das das Lithiumsalz bildet, mindestens eines von einem Carbonation, einem Oxalation, einem Acetation, einem Nitratanion, einem Sulfatanion, einem Phosphation, einem Fluorion, einem Chlorion, einem Bromion und einem lodion ist,
ein Anion, das das Kobaltsalz bildet, mindestens eines von einem Carbonation, einem Oxalation, einem Acetation, einem Nitratanion, einem Sulfatanion, einem Phosphation, einem Fluorion, einem Chlorion, einem Bromion und einem lodion ist, und
ein Anion, das das Nickelsalz bildet, mindestens eines von einem Carbonation, einem Oxalation, einem Acetation, einem Nitratanion, einem Sulfatanion, einem Phosphation, einem Fluorion, einem Chlorion, einem Bromion und einem Iodion ist;
und wobei
ein Kation, das das Phosphat bildet, ein Ammoniumion ist.

5. Lithiumionen-Sekundärbatterie, umfassend:
eine positive Elektrode (10), die das Positivelektrodenmaterial für eine Sekundärbatterie gemäß einem der Ansprüche 1 bis 3 enthält,
eine negative Elektrode (20); und
einen Elektrolyt, der zwischen der positiven Elektrode und der negativen Elektrode (20) angeordnet ist.

## Revendications

1. Matériau d'électrode positive pour batterie secondaire qui est exprimé dans la formule de composition Li₂Co₁₋ₓNiₓP₂O₇ (0,00 < x ≤ 0,20).

2. Matériau d'électrode positive pour batterie secondaire selon la revendication 1,
dans lequel une phase monocristalline du matériau d'électrode positive appartient à un groupe d'espace P21/c.

3. Matériau d'électrode positive pour batterie secondaire selon la revendication 1 ou 2,
dans lequel le matériau d'électrode positive a des pics de diffraction à 2θ = 14,3°±0,1°, 16,5°±0,1°, et 29,0°±0,1° sur la base d'une diffraction de rayons X en utilisant des rayons CuKα (2θ = 5° à 90°).

4. Procédé de fabrication d'un matériau d'électrode positive pour batterie secondaire qui est exprimé dans la formule de composition Li₂Co₁₋ₓNiₓP₂O₇ (0,00 < x ≤ 0,20), le procédé comprenant les étapes consistant à :
former un mélange d'un sel de lithium, d'un sel de cobalt, d'un sel de nickel et d'un phosphate ; et
traiter le mélange thermiquement ; dans lequel
un anion constituant le sel de lithium est au moins l'un d'un ion carbonate, d'un ion oxalate, d'un ion acétate, d'un anion nitrate, d'un anion sulfate, d'un ion phosphate, d'un ion fluor, d'un ion chlore, d'un ion brome et d'un ion iode,
un anion constituant le sel de cobalt est au moins l'un d'un ion carbonate, d'un ion oxalate, d'un ion acétate, d'un anion nitrate, d'un anion sulfate, d'un ion phosphate, d'un ion fluor, d'un ion chlore, d'un ion brome et d'un ion iode, et
un anion constituant le sel de nickel est au moins l'un d'un ion carbonate, d'un ion oxalate, d'un ion acétate, d'un anion nitrate, d'un anion sulfate, d'un ion phosphate, d'un ion fluor, d'un ion chlore, d'un ion brome et d'un ion iode ;
et dans lequel
un cation constituant le phosphate est un ion ammonium.

5. Batterie secondaire au lithium-ion comprenant :
une électrode positive (10) contenant le matériau d'électrode positive pour batterie secondaire selon l'une quelconque des revendications 1 à 3,
une électrode négative (20) ; et
un électrolyte est disposé entre l'électrode positive et l'électrode négative (20).
